# EUROPEAN PATENT SPECIFICATION

(11) **EP 1 461 243 B1**
(45) Date of publication and mention of the grant of the patent: **31.05.2006**
(21) Application number: 02708462.3
(22) Date of filing: 12.03.2002
(51) Int. Cl.: B63G 9/04, B63C 7/18

(54) **IMPACT PROTECTION SYSTEM**
AUFPRALLSCHUTZSYSTEM
SYSTEME DE PROTECTION CONTRE LES CHOCS

(30) Priority: 24.03.2001 GB 0107435
(43) Date of publication of application: 29.09.2004
(73) Proprietor: Qinetiq Limited, London, SW1E 6PD (GB)
(72) Inventor: BRYAN, Roger Keith Raymond, QinetiQ Bincleaves, Dorset DT4 8UR (GB); YOUNG, Andrew William, QinetiQ Winfrith, Winfrith, Newburgh, Dorset, DT2 8XJ (GB)
(74) Representative: Johnson, Ian Michael
(86) International application number: PCT/GB2002/001128
(87) International publication number: WO 2002/076821

(56) References cited:
- DE-A- 3 724 093
- FR-A- 864 536
- US-A- 3 220 136
- US-A- 5 069 109

## Description

This invention relates to an impact protection system, in particular for protection of objects underwater from items dropped onto them.

Many underwater objects and installations, particularly those that are situated on or near to the sea bed, require protection from items that are dropped from above e.g. from an oil rig or vessel. Protection is usually provided by burying the object in the sea bed or by covering with a protective structure such as a concrete culvert or rocks. Such methods are expensive and the latter requires precise positioning of the protective structure to avoid damaging the object. Furthermore, such prior art systems do not always provide for the minimisation of damage to the dropped item.

Another system for underwater impact protection using a net is known from DE-A-3 724 093.

In accordance with the present invention, an underwater impact protection system comprises at least one panel of netting material and an anchoring arrangement; wherein the at least one panel is attached to the anchoring arrangement and is positioned in use in the water above an object to be protected by the combined action of the buoyancy of the panel and anchoring arrangement; the anchoring arrangement and panel being designed so that a moving item incident on a panel will be retarded sufficiently by the panel such that damage to the object is minimised, and the buoyancy of the panel being provided by a buoyancy arrangement comprising a plurality of floatation devices, characterised in that the system further comprises a frusto-conical sea-anchor attached to each floatation device.

This provides system capable of protecting underwater objects situated on or near the sea bed from item dropped from above which is relatively inexpensive and relatively easily deployed. It also minimises damage to the dropped item. Also, negatively buoyant panels may be used, such as those made from nylon and other commonly available netting materials. The sea-anchor may for example comprise a hollow frusto-conical device, in which case the sea anchor is arranged so that the wider end of the frusto-conical device points substantially toward the sea floor. In this way, downward movement of the system due to the impact of a dropped object is additionally retarded by the sea anchor. Other shapes and designs for providing additional drag may be used without departing from the scope of the present invention. Some examples of alternative designs include, parachutes, sea buckets, 3 axis cross vanes or cylindrical sections.

In one particular embodiment, a moving item incident on a panel is retarded sufficiently by the drag caused by the panel such that damage to the object is minimised. This is particularly effective for the retardation of high energy objects.

Preferably, the at least one flotation device is attached to an edge of at least one panel.

Afternatively, the at least one floatation device is attached to, or near to, a corner of at least one panel.

Both attachment locations are directed towards minimising the decrease in the area of panel that is obscured by the floatation device when the impact protection system is in place.

In a preferred embodiment, a plurality of floatation devices are integrated into at least one panel. In this case, the whole of the panel area is presented to a moving object. Integration of the floatation devices may make the system easier to handle and less bulky.

In one embodiment, each floatation device is either permanently foam-filled or gas-filled. These floats are inexpensive and readily-available and do not require filling in situ.

Alternatively, buoyancy can be provided to each floatation device *in situ.* This may assist in the setting-up of the system. The buoyancy of each device may be readily adjusted in a manner that is not possible using permanently filled floats.

In one embodiment, the at least one panel is substantially coplanar with the mean position of the water surface. This provides good protection from items dropped from above the panel.

Preferably, the netting material comprises a polymer. Polymer materials are easily worked into nets. Suitable polymers include polyamides (for example nylon)
and a high modulus polythenes, such as Dyneema®. Nylon is strong and has a high extendibility. Dyneema is strong, has a high modulus and is positively buoyant in water. Other suitable polymers are known in the art.

Preferably, the polymer further comprises an inorganic material. The inorganic material increase the strength of the netting without significantly affecting weight its weight. Suitable inorganic materials include glass fibre, carbon fibre and Kevlar® fibre.

In one embodiment, each panel is substantially square. This regular shape enables objects of a complex shape to be covered and minimises the gaps between adjacent panels. Clearly other shaped panels may be used dependent on the shape and size of the object to be protected.

Preferably, the netting material is knotless.

Alternatively, the netting material is knotted. Knotless netting is stronger and lighter than knotted netting.

Preferably, the mesh of the net is either substantially square or diamond shaped. A square mesh retains the shape of the panel well. A diamond mesh maximises the number of cords in contact with an impacted item, thus reducing the likelihood of panel rupture.

In one embodiment, the anchoring arrangement comprises at least one attachment to the floor of the aquatic environment. This provides strong anchoring.

Alternatively, the anchoring arrangement comprises at least one attachment to a heavy block, which may comprise of concrete or steel. Such blocks may be advantageous where it is not possible to attach the panel to the floor of the aquatic environment e.g. if the seabed is soft.

Preferably, the impact protection system comprises a plurality of panels. This allows the replacement of single panels if they become damaged, rather than necessitating the replacement of the whole system. At least two of the panels may be connected together, resulting in fewer floatation devices being required. Adjacent panels may overlap, providing for total coverage of the protected object, the largest item that falls on the protected object being determined by the mesh size.

In another embodiment, each panel comprises two or more layers of nets. This gives extra strength and, if the nets are properly interlaced, reduces the size of the largest item that can pass through the panel onto the protected object.

The invention will now be described, by way of example only, with reference to the accompanying drawings, of which:
Figure 1 is a perspective view of a conventional method of protecting a pipeline situated on the seabed;
Figure 2 is a perspective view of a section of a second impact protection system of the prior art;
Figure 3 is a plan view of portions of two nets used in panels for deployment in the impact protection systems according to the present invention;
Figure 4 is a perspective view of a third example of an impact protection system of the prior art;
Figure 5a shows a snap ring in place connecting two section of netting;
Figures 5b and 5c show two designs of snap ring suitable for use as shown in Fig. 5a;
Figure 6 is a perspective view of an impact protection system in accordance with the present invention;
Figure 8 is a perspective view of a fourth example of an impact protection system of the prior art;
Figure 9 is a perspective view of a fifth example of an impact protection system of the prior art; and,
Figure 10 is a perspective view of a sixth example of an impact protection system of the prior art.

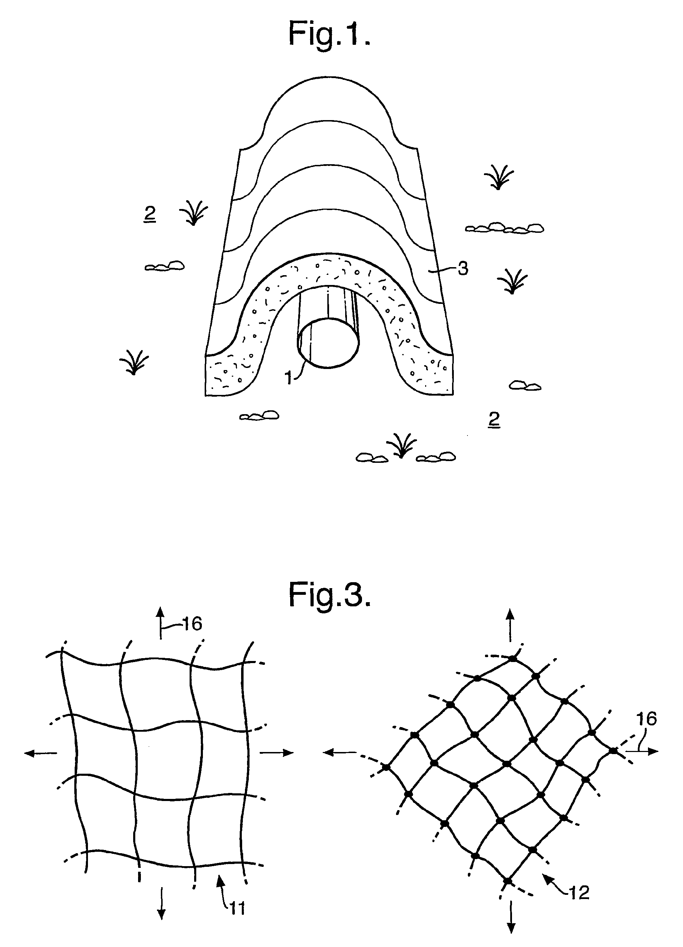

Figures 1, 2, 4 and 7-10 illustrate the prior art and are useful background for understanding the present invention.

Fig. 1 shows an example of a conventional method of protecting objects located on or near to the sea bed from falling items. A pipeline 1, for example that which connects an oil rig and an oil collection point (neither is shown), is situated on a seabed 2 and a concrete culvert 3 is provided over the pipeline 1. The culvert 3 protects the pipeline 1 from falling items, but it is expensive to either construct the culvert 3 *in situ* or to put sections of pre-fabricated culvert 3 into place. In such a case, the culvert 3 has to be positioned very precisely over the pipeline 1 as carelessness in the deployment of the culvert may damage the pipeline 1. Furthermore, such a method for the protection of the pipeline 1 neither readily allows for the inspection of the pipeline 1 using a remotely operated vehicle (ROV) nor can it be easily implemented if the pipeline to be protected is raised from the seabed 2. It should be noted that the culvert 3 provides adequate protection for the pipeline 1, but it is highly likely that an item dropped onto the culvert 3 will be significantly damaged by the impact with the culvert.

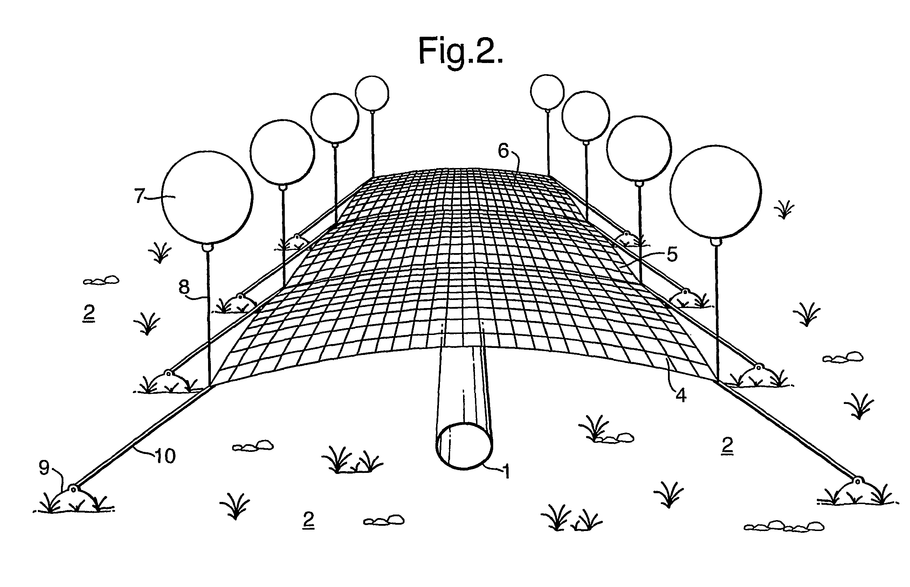

Fig. 2 shows a perspective view of a portion of a second impact protection system of the prior art deployed over the pipeline 1 situated on the seabed 2. The portion of the impact protection system comprises a plurality of panels of netting material 4, 5, 6 to which several floatation devices 7 are attached by lengths of nylon cord 8. The panels of netting material 4, 5, 6 are anchored to the seabed 2 by a series of rock bolts 9 and connected to the panels 4, 5, 6 by lengths of nylon cord 10. Each panel 4, 5, 6 overlaps with the two adjacent panels such that the desired length of the pipeline 1 is covered by netting. The overlap ensures that the size of the largest item that can hit the protected object in the region covered by the panels 4, 5. 6 is determined by the mesh size of the panel, not the gap between adjacent panels. Adjacent panels are connected at, or near, their corners using short lengths of cord (not shown); this connectivity ensures that sufficient buoyancy can be exerted on all of the panels 4, 5, 6 by the floatation devices 7, which in this case are air-filled plastic floats. The connection of panels may enable the use of fewer floatation devices. Each of the panels 4, 5, 6 is made from netting material, which in this example is Dyneema. In this embodiment of the invention the netting is knotless.

The invention overcomes many of the disadvantages of the prior art by providing an easily-deployable, inexpensive system that significantly reduces the speed of any falling item using the drag provided by a buoyancy arrangement and an anchoring arrangement attached to netting panels. Such an impact protection system allows the protection of items that are positioned raised from the seabed and allows the entrapment of high energy items. The replacement of damaged panels is facilitated by this invention as is the inspection of the protected item, for example by using an ROV. Such a modular system is versatile and adaptable, does not generally require a precise anchoring arrangement and yields a reduction in the damage suffered by the dropped item.

The panels 4, 5, 6 and floatation devices 7 are designed and arranged such that the speed of a moving item dropped or propelled from above will be reduced sufficiently by the drag caused by the panels 4, 5, 6 and the floatation devices 7 such that the object to be protected is not significantly damaged. Panel size is dependent, *inter alia,* on the size of the object to be protected, the distance from the panel to the protected object, the size of the item that is likely to be dropped, desired protection from angular impact and the mass and energy of the dropped item.

The lengths of the anchoring cords 10 are chosen to position the panels 4, 5, 6 such that a moving item is slowed down sufficiently that the object to be protected is not significantly damaged. Suitable selection of the length of cords 10 may allow the pipeline 1 to be easily inspected by an ROV. However, if the cords 10 are too long then the panels 4, 5, 6 may not provide adequate coverage from falling objects, especially from objects that do not fall vertically through the water.

The buoyancy of the floatation devices 7 is adapted to slow the dropped item sufficiently quickly that it does not damage the object beneath and does not produce breaking strains in the cords 8 connecting the floatation devices 7 and panels 4, 5, 6 as it hits a panel. The selection of suitable levels of buoyancy will depend on the size and mass of the panel and the mass of the dropped item.

The performance of a panel is dependent on the design of the netting. The panel should be light, preferably positively buoyant, since this reduces the buoyancy of the floatation devices 7 needed to decelerate a falling item, but it should be sufficiently strong so as to withstand an impact of a high energy dropped item. A positively buoyant panel will maintain its shape over the seabed. The material should be relatively strong for a small diameter braid, since this reduces weight. The braid should be relatively elastic, yet not so elastic that a significant proportion of energy is dissipated through elastic deformation of the netting rather than via deceleration of the object via drag, since this may result in rupture of the braid. The braid is resistive to corrosive elements of a sea water environment. Material strength can be improved by the impregnation of the netting with well-known materials such as glass fibre, carbon fibre and Kevlar®.

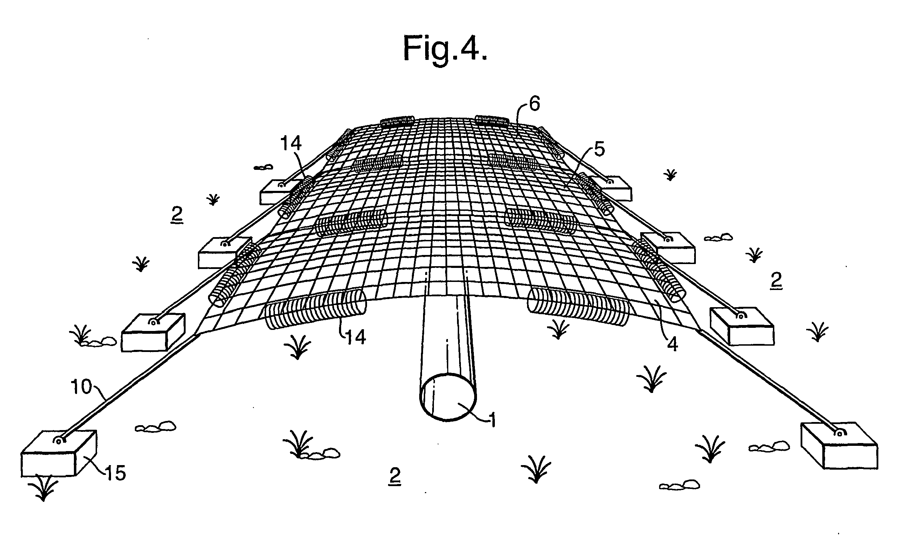

The mesh size is dictated by the size of the smallest item that it is desired to prevent from striking the pipeline 1. A decrease in mesh size leads to an increase in net weight for a given braid diameter, but increases the number of net cords in contact with a falling item, thus improving the efficiency of the dissipation of energy throughout the net. Fig. 3 shows a detailed view of two types of net that can be used to make panels for deployment in a impact protection system in accordance with the present invention. The net 11 shown on the left has square meshing, whereas the mesh of the net shown in example 12 on the right is diamond shaped. The latter has a tendency to close-up on the application of a load, indicated by arrows 16, thus preventing the escape of the incident item. This has the effect of decreasing the area of the panel that is presented to the incident item, which could be deleterious to the performance of the panel. The square netting 11 does not close-up on the application of a load and so is preferable to the netting 12 with the diamond shaped mesh. The netting 11 on the left is knotless, which is preferable to knotted netting, since knots increase panel weight and decrease the strength of the netting. However, knotless netting is more expensive and more complicated to manufacture, hence knotted
netting is expected to be a viable and important alternative to knotless netting, especially since knotting increases drag.

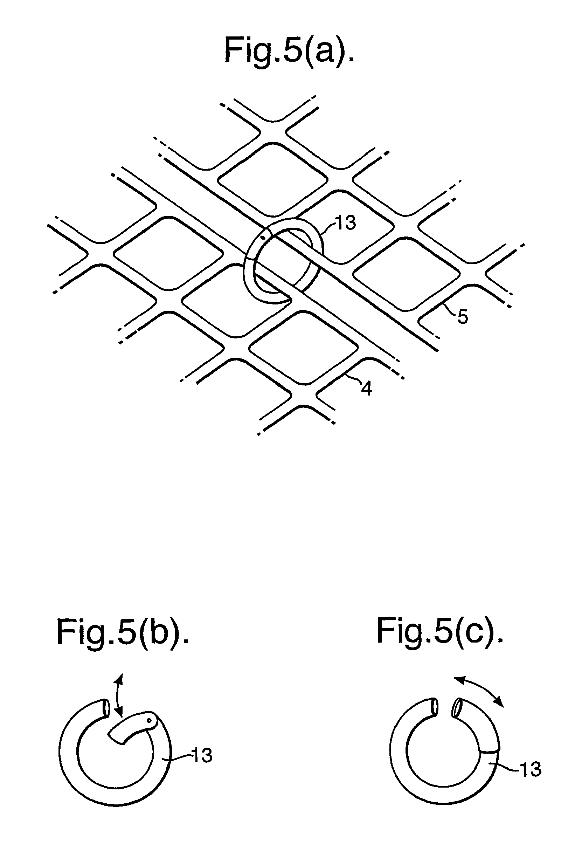

Fig. 4 shows a third impact protection system of the prior art. In this case the panels 4, 5, 6 do not overlap, each panel being connected to adjacent panels by a series of snap rings 13, and being arranged over the pipeline 1 to be protected. These snap rings 13 are shown in more detail in Figs. 5a, 5b and 5c. In Fig. 5a a single snap ring 13 is shown connecting two sections of net 4, 5. Several snap rings would commonly be used, spaced at intervals along the edges of the net panels. Floatation devices 14 are sewn into each edge of each panel, therefore dispensing With the need for separate floats and cords. Each panel is connected to the seabed 2 using cords 10 attached to concrete blocks 15. The connection of the cords 10 to blocks allows attachments to be made prior to the deployment of the system, as well as in situ. This may be important if In situ deployment is difficult. The use of blocks may be advantageous if the floor of the aquatic environment is unsuitable for the use of rock bolts or other attachment means that rely upon direct connectivity between the cords and floor, or if environmental restrictions do not allow sea floor disturbance, The snap rings 13 ensure connectivity between adjacent panels which may reduce the number of floatation devices required. The snap rings 13 also permit easy replacement of damaged panels.

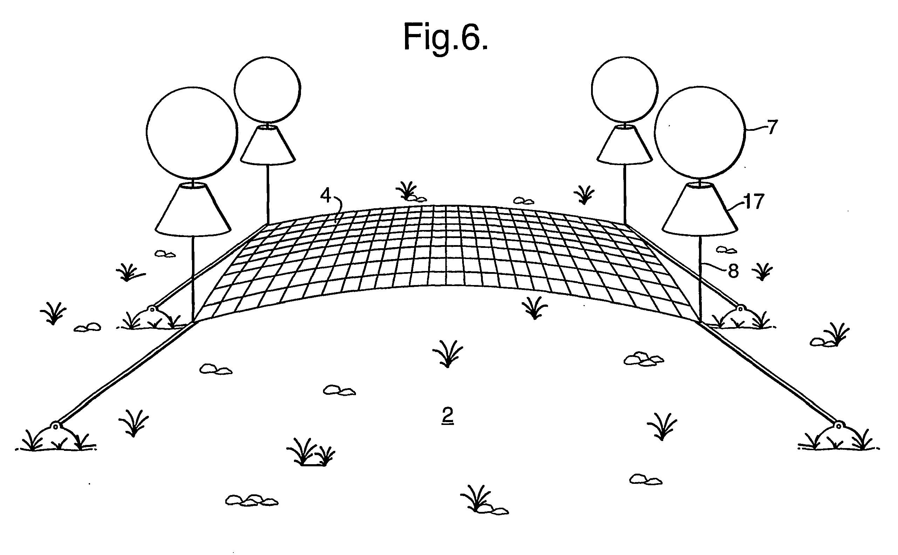

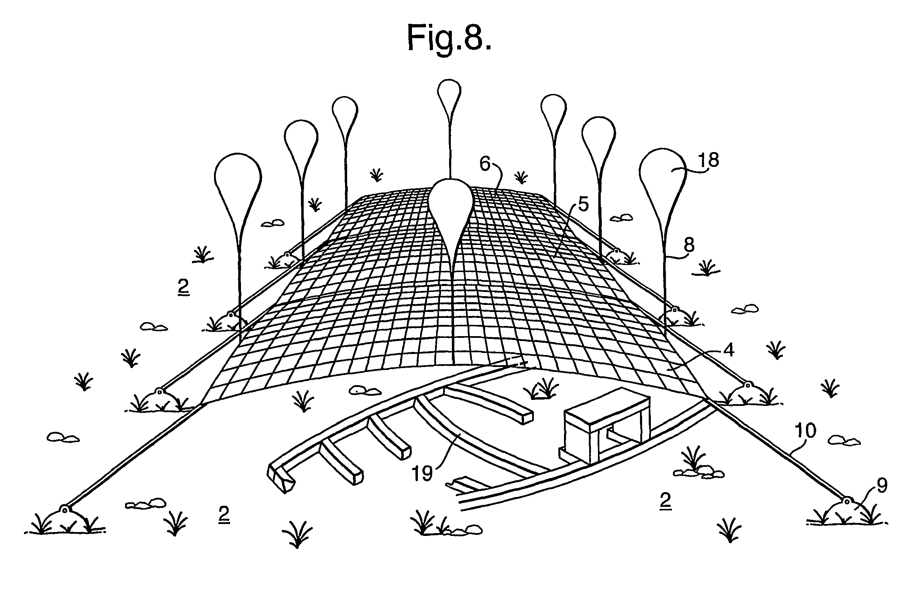

In Fig. 6 a single section of an impact protection system in accordance with the present invention is shown. In this example additional drag is provided to the system by the use of sea anchors 17. These sea anchors 17 are conveniently attached to the cords 8 connecting the floatation devices 7 to the panel 4, as shown in Fig. 6, however they may equally be attached separately to the panels, or incorporated into the panels. The shape of the sea anchors, in this example, frusto-conical, provides increased resistance to downward motion in reaction to a moving item incident on the panel 4. This may be useful if the system is intended to protect against damage from heavy dropped objects. These drag inducing systems could also reduce the number of floatation units required thereby aiding deployment and retrieval. It is clearly possible to design other shapes of sea anchor without departing from the scope of the present invention. Some alternative designs of sea anchor are shown in Figs. 7a - 7c.

Figure 8 shows a fourth example of an impact protection system of the prior art. Floatation devices 18 are attached to panels 4, 5, 6 by means of cords 8. The panels 4, 5, 6, which are made from Dyneema®, are positioned over a shipwreck 19 by connection to a series of rock bolts 9 with nylon
cords 10. The floatation devices 18 are lifting bags similar to those used by divers. These can be easily deployed by filling with air *in situ* thus there is no requirement to try to drag buoyant floatation devices from the surface to the seabed 2. The floatation devices are situated approximately half way along an edge of a panel. The panels 4, 5, 6 are not over-lapping and each panel is connected to adjacent panels by a series of snap rings (not shown).

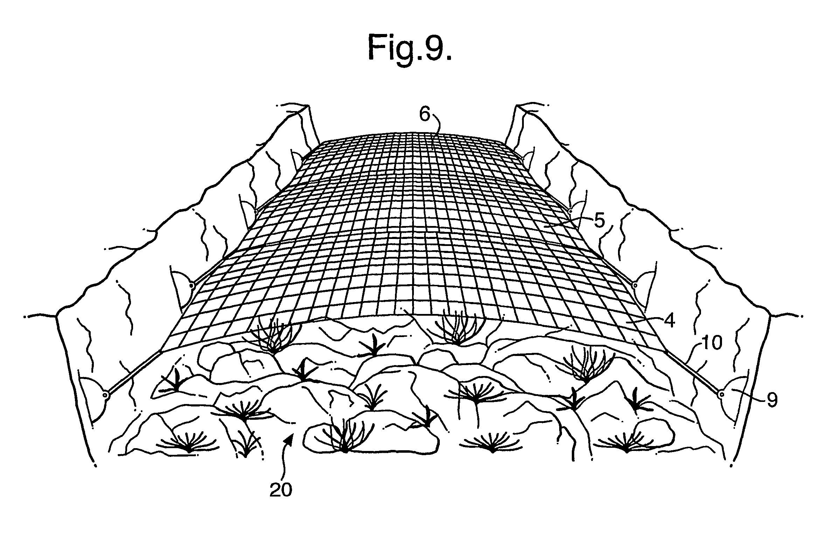

Figure 9 shows a fifth example of an impact protection system of the prior art. The panels 4, 5, 6 are made of Dyneema and are positioned over a reef 20 by a combination of the buoyancy of the panels 4, 5, 6, the location of the rock bolts 9 and the nylon cords 10 connecting the panels 4, 5, 6 to the rock bolts 9. In this example there is no buoyancy arrangement attached to the panels because Dyneema is positively buoyant in water.

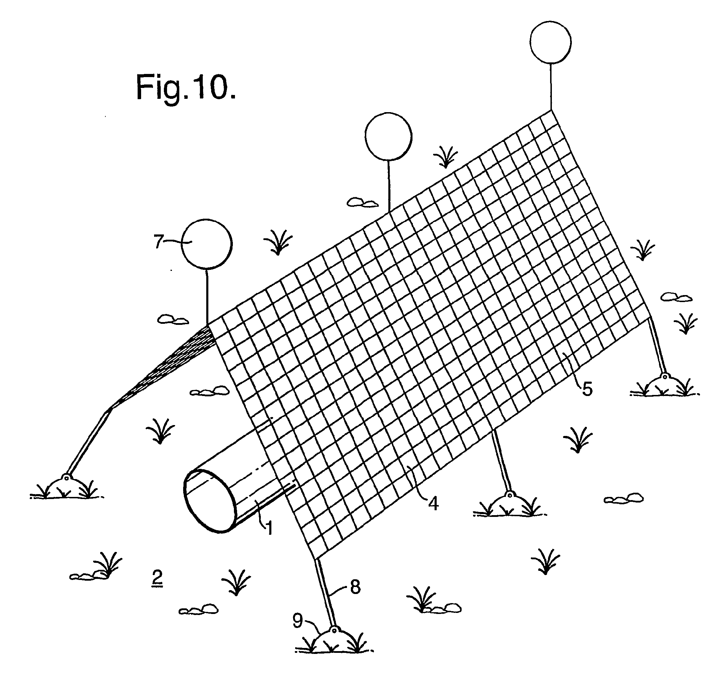

A sixth example of an impact protection system is shown in Fig. 10. In this case panels 4, 5 are made from nylon and are positioned over an object to be protected 1 by a combination of the buoyancy of the floatation devices 7, the location of the rock bolts 9 and the nylon ropes 8. With this design, any falling object is deflected to the sea floor, away from the protected object 1.

A collision of a high energy body onto an impact protection system in accordance with the present invention is now described. A significant deceleration of the speeding body typically occurs in the first few tenths of a second following impact, principally due to a local extension of the cords of the panel around the contact point. Tension increases in these cords around the contact point until energy is transmitted into other cords in the net. This transmission of energy causes sections of the net to move. The drag of the net (and where appropriate, the buoyancy arrangement and drag inducing units) moving through the water causes the speeding body to be further slowed. The cords around the contact point will break if the tension to which they are submitted exceeds the breaking strength of the cords; this is likely to occur if energy is not transmitted sufficiently quickly to other cords in the panel i.e. breakage is more likely if the speeding item is not subjected to the drag of the net (and possibly buoyancy and additional drag arrangements). Whether a breakage occurs depends on the properties of the net material (strength, elasticity), the thickness of braid, the construction of the net (mesh size, mesh shape, knotting), the kinetic energy of the falling object, the size of the falling object and the size of the panel. For example, if a panel is sufficiently large such that the outer regions act as though fixed during the initial contact between the speeding object and panel, then tension levels may build-up in the net without being relieved by the bulk net movement, and hence breakage
may occur. In this respect a less elastic material offers a better prospect of maintaining net integrity as it spreads the load more quickly away from the initial contact area. Hence, a high modulus polythene such as Dyneema is preferable to nylon. Dyneema is stronger than nylon and has a far lower density; it is positively buoyant in water and can be readily used in an impact protection system in accordance with the present invention without the use of an additional buoyancy arrangement.

## Claims

1. An underwater impact protection system comprising at least one panel of netting material (4) and an anchoring arrangement; wherein the at least one panel is attached to the anchoring arrangement and may be positioned in the water above an object to be protected by the combined action of the buoyancy of the panel and anchoring arrangement; the anchoring arrangement and panel being designed so that a moving item incident on a panel will be retarded sufficiently by the panel such that damage to the object is minimised, and the buoyancy of the panel being provided by a buoyancy arrangement comprising a plurality of floatation devices (7), **characterised in that** the system further comprises a frusto-conical sea-anchor (17) attached to each floatation device.

2. An impact protection system according to claim 1, wherein a moving item incident on a panel is retarded sufficiently by the drag caused by the panel such that damage to the object is minimised.

3. An impact protection system according to claim 2, wherein the at least one flotation device is attached to an edge of at least one panel.

4. An impact protection system according to claim 2, wherein at least one floatation device is attached to, or near to, a corner of at least one panel.

5. An impact protection system according to claim 2, wherein a plurality of floatation devices are integrated into at least one panel.

6. An impact protection system according to any one of claims 2 to 5, wherein each floatation device is either permanently foam-filled or gas-filled.

7. An impact protection system according to any one of claims 2 to 5, wherein buoyancy can be provided to each floatation device *in situ.*

8. An impact protection system according to any preceding claim, wherein the at least one panel is substantially coplanar with the mean position of the water surface.

9. An impact protection system according to any preceding claim, wherein the netting material comprises a polymer.

10. An impact protection system according to claim 9, wherein the polymer is chosen from one of a polyamide, nylon and Dyneema® .

11. An impact protection system according to claim 9 or 10, wherein the polymer further comprises an inorganic material.

12. An impact protection system according to claim 11, wherein the inorganic material is any one of glass fibre, carbon fibre and Kevlar® fibre.

13. An impact protection system according to any preceding claim, wherein each panel is substantially square.

14. An impact protection system according to any preceding claim, wherein the netting material is knotless.

15. An impact protection system according to any preceding claim, wherein the mesh of the net is either substantially square or diamond shaped.

16. An impact protection system according to any preceding claim, wherein the anchoring arrangement comprises at least one attachment to the floor of the aquatic environment.

17. An impact protection system according to any one of claims 1 to 13, wherein the anchoring arrangement comprises at least one attachment to a heavy block.

18. An impact protection system according to claim 17, wherein the block is made from one of concrete or steel.

19. An impact protection system according to any preceding claim, wherein the impact protection system comprises a plurality of panels.

20. An impact protection system according to claim 19, wherein at least two of the panels are connected together.

21. An impact protection system according to claim 19 or 20, wherein adjacent panels overlap.

22. A impact protection system according to any preceding claim, wherein each panel comprises two or more layers of net.

## Patentansprüche

1. Unterwasser-Aufprallschutzsystem, das mindestens eine Matte aus einem Netzmaterial (4) und eine Ankeranordnung umfasst, bei dem die mindestens eine Matte an der Ankeranordnung befestigt ist und im Wasser über einem zu schützenden Objekt durch die kombinierte Wirkung des Auftriebs der Matte und der Ankeranordnung positioniert werden kann, wobei die Ankeranordnung und die Matte so ausgeführt sind, dass ein sich bewegender Gegenstand, der auf eine Matte auftrifft, durch die Matte so ausreichend abgebremst wird, dass der Schaden am Objekt minimiert wird, und der Auftrieb der Matte durch eine Auftriebsanordnung vorgesehen ist, die mehrere Schwimmvorrichtungen (7) umfasst,
**dadurch gekennzeichnet, dass** das System ferner einen stumpfkegeligen Treibanker (17) aufweist, der an jeder Schwimmvorrichtung angebracht ist.

2. Unterwasser-Aufprallschutzsystem nach Anspruch 1, bei dem ein sich bewegender Gegenstand, der auf eine Matte auftrifft, durch den von der Matte verursachten Widerstand so ausreichend abgebremst wird, dass der Schaden am Objekt minimiert wird.

3. Unterwasser-Aufprallschutzsystem nach Anspruch 2, bei dem mindestens eine Schwimmvorrichtung an einer Kante von mindestens einer Matte angebracht ist.

4. Unterwasser-Aufprallschutzsystem nach Anspruch 2, bei dem mindestens eine Schwimmvorrichtung an einer Ecke oder nahe an einer Ecke von mindestens einer Matte angebracht ist.

5. Unterwasser-Aufprallschutzsystem nach Anspruch 2, bei dem mehrere Schwimmvorrichtungen in mindestens eine Matte integriert sind.

6. Unterwasser-Aufprallschutzsystem nach einem der Ansprüche 2 bis 5, bei dem jede Schwimmvorrichtung entweder permanent mit Schaum oder mit Gas gefüllt ist.

7. Unterwasser-Aufprallschutzsystem nach einem der Ansprüche 2 bis 5, bei dem der Auftrieb für jede Schwimmvorrichtung *in situ* hergestellt werden kann.

8. Unterwasser-Aufprallschutzsystem nach einem der vorhergehenden Ansprüche, bei dem sich die mindestens eine Matte im wesentlichen in der gleichen Ebene befindet wie es im Großen und Ganzen der Wasseroberfläche entspricht.

9. Unterwasser-Aufprallschutzsystem nach einem der vorhergehenden Ansprüche, bei dem das Netzmaterial ein Polymer ist.

10. Unterwasser-Aufprallschutzsystem nach Anspruch 9, bei dem das Polymer aus der Gruppe ausgewählt ist, die aus Polyamid, Nylon und Dyneema® besteht.

11. Unterwasser-Aufprallschutzsystem nach Anspruch 9 oder 10, bei dem das Polymer ferner ein anorganisches Material enthält.

12. Unterwasser-Aufprallschutzsystem nach Anspruch 11, bei dem das anorganische Material aus Glasfasern, Kohlenstoffasern oder Kevlar®-Fasern besteht.

13. Unterwasser-Aufprallschutzsystem nach einem der vorhergehenden Ansprüche, bei dem jede Matte im wesentlichen quadratisch ist.

14. Unterwasser-Aufprallschutzsystem nach einem der vorhergehenden Ansprüche, bei dem das Netzmaterial keine Knoten hat.

15. Unterwasser-Aufprallschutzsystem nach einem der vorhergehenden Ansprüche, bei dem die Maschen des Netzes entweder im wesentlichen quadratisch sind oder eine Diamantform haben.

16. Unterwasser-Aufprallschutzsystem nach einem der vorhergehenden Ansprüche, bei dem die Ankeranordnung mindestens eine Befestigung am Boden der Wasserumgebung umfasst.

17. Unterwasser-Aufprallschutzsystem nach einem der Ansprüche 1 bis 13, bei dem die Ankeranordnung mindestens eine Befestigung an einem schweren Block aufweist.

18. Unterwasser-Aufprallschutzsystem nach Anspruch 17, bei dem der Block aus Beton oder Stahl besteht.

19. Unterwasser-Aufprallschutzsystem nach einem der vorhergehenden Ansprüche, bei dem das Aufprallschutzsystem mehrere Matten aufweist.

20. Unterwasser-Aufprallschutzsystem nach Anspruch 19, bei dem mindestens zwei der Matten miteinander verbunden sind.

21. Unterwasser-Aufprallschutzsystem nach Anspruch 19 oder 20, bei dem sich die benachbarten Matten überlappen.

22. Unterwasser-Aufprallschutzsystem nach einem der vorhergehenden Ansprüche, bei dem jede Matte zwei oder mehr Netzschichten aufweist.

## Revendications

1. Système sous-marin de protection contre les chocs comprenant au moins un panneau d'un matériau sous forme de filet (4) et un agencement d'ancrage ; dans lequel le ou les panneaux sont fixés à l'agencement d'ancrage et peuvent être positionnés dans l'eau au-dessus d'un objet à protéger par l'action combinée de la flottabilité du panneau et de l'agencement d'ancrage ; l'agencement d'ancrage et le panneau étant conçus de telle façon qu'un élément en mouvement tombant sur un panneau soit ralenti suffisamment par le panneau pour que les dommages pour l'objet soient minimisés et la flottabilité du panneau étant assurée par un agencement de flottabilité comprenant une pluralité de dispositifs de flottaison (7), **caractérisé en ce que** le système comprend en outre une ancre flottante tronconique (17) fixée à chaque dispositif de flottaison.

2. Système de protection contre les chocs selon la revendication 1, dans lequel un élément en mouvement tombant sur un panneau est ralenti suffisamment par la traînée causée par le panneau pour que les dommages pour l'objet soient minimisés.

3. Système de protection contre les chocs selon la revendication 2, dans lequel le ou les dispositifs de flottaison sont fixés à un bord d'au moins un panneau.

4. Système de protection contre les chocs selon la revendication 2, dans lequel au moins un dispositif de flottaison est fixé à l'angle ou à proximité de l'angle d'au moins un panneau.

5. Système de protection contre les chocs selon la revendication 2, dans lequel une pluralité de dispositifs de flottaison est intégrée dans au moins un panneau.

6. Système de protection contre les chocs selon l'une quelconque des revendications 2 à 5, dans lequel chaque dispositif de flottaison est soit rempli de mousse, soit rempli de gaz de façon permanente.

7. Système de protection contre les chocs selon l'une quelconque des revendications 2 à 5, dans lequel la flottabilité peut être fournie à chaque dispositif de flottaison *in situ.*

8. Système de protection contre les chocs selon l'une quelconque des revendications précédentes, dans lequel le ou les panneaux sont substantiellement dans le même plan que la position moyenne de la surface de l'eau.

9. Système de protection contre les chocs selon l'une quelconque des revendications précédentes, dans lequel le matériau sous forme de filet comprend un polymère.

10. Système de protection contre les chocs selon la revendication 9, dans lequel le polymère est choisi parmi l'un d'un polyamide, de nylon et de Dyneema®.

11. Système de protection contre les chocs selon la revendication 9 ou 10, dans lequel le polymère comprend en outre une matière inorganique.

12. Système de protection contre les chocs selon la revendication 11, dans lequel la matière inorganique est l'une quelconque parmi la fibre de verre, la fibre de carbone et la fibre Kevlar®.

13. Système de protection contre les chocs selon l'une quelconque des revendications précédentes, dans lequel chaque panneau est substantiellement carré.

14. Système de protection contre les chocs selon l'une quelconque des revendications précédentes, dans lequel le matériau sous forme de filet est sans noeuds.

15. Système de protection contre les chocs selon l'une quelconque des revendications précédentes, dans lequel la maille du filet est substantiellement soit carrée, soit en forme de losange.

16. Système de protection contre les chocs selon l'une quelconque des revendications précédentes, dans lequel l'agencement d'ancrage comprend au moins une fixation au fond de l'environnement aquatique.

17. Système de protection contre les chocs selon l'une quelconque des revendications 1 à 13, dans lequel l'agencement d'ancrage comprend au moins une fixation à un bloc lourd.

18. Système de protection contre les chocs selon la revendication 17, dans lequel le bloc est fait de l'un parmi le béton ou l'acier.

19. Système de protection contre les chocs selon l'une quelconque des revendications précédentes, dans lequel le système de protection contre les chocs comprend une pluralité de panneaux.

20. Système de protection contre les chocs selon la revendication 19, dans lequel au moins deux des panneaux sont raccordés ensemble.

21. Système de protection contre les chocs selon la revendication 19 ou 20, dans lequel des panneaux adjacents se chevauchent.

22. Système de protection contre les chocs selon l'une quelconque des revendications précédentes, dans lequel chaque panneau comprend deux couches de filet ou plus.
